# EUROPÄISCHE PATENTSCHRIFT

(11) **EP 1 593 428 B1**
(45) Veröffentlichungstag und Bekanntmachung des Hinweises auf die Patenterteilung: **18.07.2012**
(21) Anmeldenummer: 05009857.3
(22) Anmeldetag: 04.05.2005
(51) Int. Cl.: B01J 20/20, C02F 1/28

(54) **Aktivkohlezusammensetzung und deren Verwendung zur Aufbereitung von Schwimmbadwasser**
Activated carbon composition and use thereof for treating swimming pool water
Composition à base de charbon actif et son utilisation dans le traitement d'eau de piscine

(30) Priorität: 06.05.2004 DE 102004022264
(43) Veröffentlichungstag der Anmeldung: 09.11.2005
(73) Patentinhaber: Witty-Chemie GmbH & Co. KG, 86424 Dinkelscherben (DE)
(72) Erfinder: Meder, Hans-Joachim, D-88453 Erolzheim (DE); Braun, Brigitte, D-86367 Gersthofen (DE)
(74) Vertreter: Müller, Bernhard

(56) Entgegenhaltungen:
- EP-A- 0 286 453
- EP-A- 0 597 542
- US-A- 4 737 293
- US-A- 4 765 923
- US-A- 5 705 269
- US-A1- 2004 164 018

## Beschreibung

Bei der Aufbereitung von Wasser, insbesondere Schwimmbadwasser werden zur Entkeimung Chlorprodukte verwendet. Reaktionsprodukte der als Oxidationsmittel wirkenden Chlorprodukte, z. B. Chlorstickstoffverbindungen (Chloramine) und chlorierte Kohlenwasserstoffe, müssen aus dem Schwimmbadwasser entfernt werden. Dies geschieht zweckmäßigerweise unter Verwendung von Aktivkohle, an der überschüssiges Oxidationsmittel und gebundenes Chlor durch katalytische Reaktionen zersetzt werden und Organochlorverbindungen adsorbiert werden.

Ein Problem dabei besteht darin, dass die u.a. für diesen Zweck zum Einsatz kommenden Aktivkohle-Wasser-Suspensionen leicht einer Verkeimung unterliegen. Zur Vermeidung einer derartigen Verkeimung wird gemäß DIN 19643, Teil 2, Abschnitt 4.3, eine Ansäuerung auf pH-Werte unter 2 empfohlen.

Ein Nachteil einer derartigen Ansäuerung besteht darin, dass laut der genannten DIN-Norm die Impfstelle für Kohle vor der Impfstelle für Flockungsmittel liegt. Normale Flockungsmittel sind leicht sauer, so dass sich aufgrund des starken Säureeintrags durch die angesäuerte Aktivkohle u.U. schlechte Flockungsbedingungen ergeben, wobei die Flockung verzögert wird oder sich eine Nachflockung im Becken ergeben kann. Durch die Verwendung neutraler oder leicht alkalischer Aktivkohlen könnte diesem Effekt begegnet werden, jedoch besteht dann die eingangs genannte Verkeimungsgefahr.

Ein weiterer Nachteil bei der Verwendung von angesäuerter Aktivkohle insbesondere bei weichem Wasser oder Desinfektion mit Chlorgas kann u.U. darin bestehen, dass zur Gewährleistung DIN-gerechter pH-Werte für das Schwimmbadwasser zusätzliche alkalische Substanzen, insbesondere Natronlauge oder Natriumcarbonat zur pH-Wert-Korrektur, zugesetzt werden müssen.

US 5 705 269 A *betrifft eine Zusammensetzung, die Aktivkohle und daran adsorbierte Verbindungen mit bakteriziden Eigenschaften umfasst. In dieser Druckschrift wird weder der Einsatz von polykationischen Verbindungen noch eine Verwendung der Zusammensetzungen zur Aufbereitung von Schwimmbadwasser erwähnt.*

US 4 765 923 A *betrifft eine Zusammensetzung zur Verringerung von farbigen Verunreinigungen in Trinkwasser. Die Zusammensetzung stellt eine Kombination aus Pulveraktivkohle und einem kationischen Polymer dar. Die Verwendung einer derartigen Zusammensetzung* zur Aufbereitung *von Schwimmbadwasser wird in dieser Druckschrift nicht erwähnt*.

EP 0 597 542 A *beschreibt eine nicht-harzige Adsorptionsmittelzusammensetzung, die an Fullererde gebundene Aktivkohle sowie ein pulverförmiges Anionenaustauscherharz, einen kationischen Polyelektrolyten und einen anionischen Polyelektrolyten enthält. Die Verwendung derartiger Zusammensetzungen zur Aufbereitung von Schwimmbadwasser wird nicht beschrieben.*

US 4 737 293 A *betrifft Verfahren zur Verringerung des Gehalts an Trihalogenmethanen in Wasser durch Zugabe von Aktivkohle und einer Kombination aus mindestens zwei in Wasser löslichen oder dispergierbaren kationischen Polymeren. Die Verwendung derartiger Zusammensetzungen zur Aufbereitung von Schwimmbadwasser wird nicht beschrieben.*

*Aufgabe der Erfindung ist es, Schwimmbadwasser unter Verwendung einer Aktivkohlezusammensetzung aufzubereiten und dabei die vorstehend geschilderten Nachteile zu überwinden.*

*Der Gegenstand der Erfindung ist in den Patentansprüchen definiert.*

Als polykationische Verbindungen kommen insbesondere chlorstabile kationische Polyelektrolyte mit hoher Ladungsdichte in Frage. Beispiele für entsprechende Produkte sind N,N-Dimethyl-2hydroxyalkylammoniumchloridpolymere und Polydimethyldialkylammoniumchloride.

Beispiele für Komplexierungsmittel, *die in der Aktivkohlezusammensetzung zusätzlich verwendet werden können,* sind als Komplexierungsmittel wirkende Na-Acrylate, Polyacrylsäuren und Na-maleinat-acrylate mit bevorzugten mittleren Molgewichten von 4.000-300.000.

Wichtig ist, dass die Additive für die Aktivkohle gegenüber Chlorprodukten stabil sind, um die Bildung von zusätzlichem gebundenem Chlor und anderen Chlorderivaten möglichst auszuschließen.

Als Lauge zur Einstellung eines alkalischen pH-Werts bei zusätzlicher Verwendung eines *Komplexierungsmittels* wird vorzugsweise Natronlauge verwendet.

Die Verhinderung der Verkeimung beruht bei der Variante a. darauf, dass die polykationischen Verbindungen eine biozide Wirkung aufweisen. Der Zusatz dieser Verbindungen ist vom hygienischen Standpunkt aus unbedenklich, da sie bereits seit vielen Jahren als Bestandteil von im Schwimmbad eingesetzten Algiziden Verwendung finden.

Die keimverhindernde Wirkung bei der Variante b. zusätzlicher Verwendung eines Komplexierungsmittels ist darin zu sehen, dass das alkalische Milieu für eine Ausbreitung von Keimen wesentlich ungünstiger ist, als dies bei einer neutralen Aktivkohle-Suspension der Fall ist. Möglicherweise hat auch das Komplexierungsmittel einen Einfluss auf die keimverhindernde Beschaffenheit.

Die Verwendung der erfindungsgemäßen Aktivkohlezusammensetzung bietet somit zahlreiche Vorteile, wozu die folgenden Punkte gehören:
1. Die leicht alkalische oder alkalische Beschaffenheit der Aktivkohle-Suspension gewährleistet ein hohes Vermögen zur Reduzierung von gebundenem Chlor.
2. Die Aktivkohle-Suspension unterliegt trotz der fehlenden Ansäuerung praktisch keiner Verkeimung.
3. Der Bedarf an pH-Heber zur Einstellung des geeigneten pH-Werts des Schwimmbadwassers verringert sich aufgrund der Tatsache, dass die Aktivkohle-Suspension nicht auf einen sehr stark sauren Wert eingestellt ist.
4. Nachteile, die durch eine Verzögerung der Ausflockung oder eine Nachflockung im Becken aufgrund des sauren pH-Werts der Aktivkohle-Suspension entstehen, werden vermieden.
5. Die polykationischen Verbindungen wirken als Katalysatoren bei der Zersetzung von gebundenem Chlor.
6. Die polykationischen Verbindungen bewirken eine bessere Benetzbarkeit der Aktivkohle.
7. Chlorierte Kohlenwasserstoffe u.a. speziell auch Trihalogenmethane werden an der Aktivkohle adsorbiert.

Die erfindungsgemäßen Mittel werden zweckmäßigerweise durch Vermischen der trockenen Aktivkohle mit der polykationischen Verbindung und gegebenenfalls einer alkalischen Verbindung und einem Komplexierungsmittel oder c. beiden Bestandteilen gemäß a. und b. hergestellt.

Zweckmäßigerweise wird dieses Gemisch mit einem gewissen Wasseranteil versetzt, um die Staubentwicklung der Aktivkohle zu vermeiden. So enthält ein geeignetes Produkt gemäß , bezogen auf die trockene Aktivkohle beispielsweise 0,1 bis 15 % der polykationischen Verbindung, vorzugsweise 0,2 bis 10 % und insbesondere 0,3 bis 3 % sowie 10 bis 50 % und vorzugsweise 20 bis 40 % Wasser.

Die Herstellung der erfindungsgemäßen Aktivkohlezusammensetzung erfolgt zweckmäßigerweise folgendermaßen: In einem Behälter mit Rührwerk wird Wasser vorgelegt. Unter ständigem Rühren werden die entsprechenden Komponenten zugemischt. Diese Mischung wird über entsprechende Düsen auf die Pulveraktivkohle in einem Feststoffmischer aufgebracht.

Im Fall der zusätzlichen Verwendung eines Komplexierungsmittels und einer alkalischen Verbindung enthält ein geeignetes Produkt bezogen auf die Aktivkohle beispielsweise 1 bis 10 % und vorzugsweise 5 bis 10 % NaOH, 1 bis 10 % und vorzugsweise 1 bis 5 % Komplexbildner und 10 bis 50 % und vorzugsweise 30 bis 50 % Wasser.

Als für den erfindungsgemäßen Zweck geeignete Aktivkohlen können für die Wasseraufbereitung empfohlene Pulveraktivkohlenspezifikationen gemäß DIN 19603 und DIN 19643, Teil 2, Punkt 4.3 eingesetzt werden.

Solche Aktivkohlepulver haben nach DIN 66131 eine innere Oberfläche größer 900m²/g, bei einer Korngrößenverteilung <25% mit Korngröße >0,071 mm und >50% Anteil mit Korngröße <0,045 mm. Die verwendeten Kohlen sollen darüber hinaus einen geringen Anteil an Überkorn >1 mm besitzen.

Aus den vorgenannten angefeuchteten Produkten wird für die Aufbereitung von Schwimmbadwasser eine Aktivkohle-Suspension hergestellt, indem man, bezogen auf 1 Teil trockene Aktivkohle, 10 bis 100 Teile und vorzugsweise 20 bis 50 Teile Wasser zusetzt und durch Vermischen eine Suspension erhält. Diese Suspension wird dann in der üblichen Weise für die Aufbereitung von Schwimmbadwasser verwendet.

Nachstehend wird die Erfindung anhand von Beispielen näher erläutert.

### Beispiel 1

Die folgenden Bestandteile werden unter Bildung eines angefeuchteten Aktivkohleprodukts vermischt:

| | |
|---|---|
| Wasser | 24 Gew.-% |
| Lonzabac PQ | 6 Gew.-% |
| Centaur Pulsorb C90 | 70 Gew.-% |

### Beispiel 2 (nicht erfindungsgemäß)

Die folgenden Bestandteile werden unter Bildung eines angefeuchteten Aktivkohleprodukts vermischt:

| | |
|---|---|
| Wasser | 15,5 Gew.-% |
| Natriumhydroxid 50%ig | 11,5 Gew.-% |
| Centaur Powder | 70 Gew.-% |
| Sokalan CP5 | 3 Gew.-% |

### Beispiel 3

| | |
|---|---|
| Wasser | 18 Gew.-% |
| Natriumhydroxid 50%ig | 7 Gew.-% |
| Sokalan CP5 | 3 Gew.-% |
| Lonzabac PQ | 2 Gew.-% |
| Centaur Powder | 70 Gew.-% |

### Verkeimungstest

Mit den vorstehenden Aktivkohleprodukten der Beispiele 1, 2 und 3 werden Verkeimungstests durchgeführt. Hierfür werden in zwei Liter fassenden Bechergläsern jeweils 80 g des Aktivkohleprodukts mit 1,5 Liter (pH-Wert etwa 7,5, Härte etwa 15° dH) Leitungswasser versetzt. Die Suspension wird gut aufgerührt und ca. 30 Minuten stehen gelassen. Zur Durchführung eines Abklatschtests wird mit Hilfe einer sterilisierten 1 ml-Pipette 0,1 ml der Suspension auf eine Rodac-Platte (Fa. Heipha Diagnostica, Abklatschagar mit Enthemmer; Art. Nr. 228e) gegeben und mit einem abgeflammten Edelstahl-Löffel verteilt. Die Platten werden 48 Stunden bei 37 °C bebrütet. Diese Abklatschtests werden in wöchentlichen Abständen insgesamt viermal wiederholt. Die Ergebnisse sind in der nachstehenden Tabelle zusammengestellt.

Es zeigt sich, dass die erfindungsgemäßen Aktivkohlezusammensetzungen in Bezug auf den Verkeimungszustand einem entsprechenden Produkt ohne den erfindungsgemäßen Zusatz deutlich überlegen sind.

**Tabelle**

| | **Kontrolle** | **Beispiel 1** | **Beispiel 2 *(nicht erfindungsgemäß)*** | **Beispiel 3** |
|---|---|---|---|---|
| | | | | 18% Wasser |
| | | | | 7% Natriumhydroxid 50%ig |
| | | | | 3% |
| | | | 15,5% Wasser | Maleinsäure(AcrylsäureCopolymerisat) |
| | | 24% Wasser | 11,5% Natriumhydroxid | Na-Salz |
| | | 6% N,N-Dimethyl- | 50%ig | 2% N,N-Dimethyl- |
| | | 2hydroxypropylammoniumchlorid- | 70% Centauer Powder | 2hydroxypropylammoniumchlorid- |
| | | polymer | 3% Maleinsäure(Acrylsäure- | polymer |
| Kohle-Ansatz | Leitungswasser | 70% Centaur Pulsorb C90 | Copolymerisat) Na-Salz | 70% Centaur Powder |
| | | | | |
| Ansatz-Datum | 12.05.2004 | 12.05.2004 | | 12.05.2004 |
| 1. Abklatschtest | | | | |
| vom 12.05.04 | | | | |
| bis 14.05.04 | 44 Keime/100m² | 4 Keime/100m² | 4 Keime/100m² | ohne Befund |
| | | | | |
| 2. Abklatschtest | | | | |
| vom 19.05.04 | Rasen, nicht mehr | | | |
| bis 21.05.04 | zählbar | ohne Befund | ohne Befund | ohne Befund |
| | | | | |
| 3. Abklatschtest | | | | |
| vom 26.05.04 | Rasen, nicht mehr zählbar | | | |
| bis 28.05.04 | | ohne Befund | ohne Befund | ohne Befund |
| 4. Abklatschtest | | | | |
| vom 02.06.04 | | | | |
| bis 04.06.04 | 528 Keime/100m² | 4 Keime/100m² | ohne Befund | ohne Befund |
| | | | | |
| 5. Abklatschtest | | | | |
| vom 09.06.04 | | | | |
| bis 11.06.04 | 140 Keime/100m² | ohne Befund | ohne Befund | ohne Befund |

## Patentansprüche

1. Verwendung einer Aktivkohlezusammensetzung, enthaltend Pulveraktivkohle und eine polykationische Verbindung, zur Aufbereitung von Schwimmbadwasser.

2. Verwendung nach Anspruch 1, **dadurch gekennzeichnet, dass** die Zusammensetzung zusätzlich eine alkalische Verbindung und ein Komplexierungsmittel enthält.

3. Verwendung nach Anspruch 1 oder 2, **dadurch gekennzeichnet, dass** die Zusammensetzung, bezogen auf trockene Pulveraktivkohle, 10 bis 50 Gew.-% Wasser enthält und **dadurch** eine staubfreie Beschaffenheit der Zusammensetzung gewährleistet.

4. Verwendung nach einem der Ansprüche 1 bis 3,
**dadurch gekennzeichnet, dass** die Zusammensetzung, bezogen auf trockene Pulveraktivkohle, 0,1 bis 15 Gew.-% der polykationischen Verbindung enthält.

5. Verwendung nach einem der Ansprüche 2 bis 4,
**dadurch gekennzeichnet, dass** die Zusammensetzung, bezogen auf die trockene Pulveraktivkohle, 1 bis 10 % Lauge entsprechend DIN 19643 und 1 bis 5 % Komplexbildner enthält.

## Claims

1. Use of an active carbon composition containing pulverulent active carbon and a polycationic compound for conditioning swimming-pool water.

2. Use according to claim 1, **characterized in that** the composition additionally contains an alkaline compound and a complexing agent.

3. Use according to claim 1 or 2, **characterized in that** the composition contains 10 to 50 wt.% water with respect to the dry pulverulent active carbon and thereby ensures a dust-free constitution of the composition.

4. Use according to any one of claims 1 to 3, **characterized in that** the composition contains 0.1 to 15 wt.% of the polycationic compound with respect to the dry pulverulent active carbon.

5. Use according to any one of claims 2 to 4, **characterized in that** the composition contains 1 to 10 % alkaline solution according to DIN 19643 and 1 to 5 % complexing agent with respect to the dry pulverulent active carbon.

## Revendications

1. Utilisation d'une composition à base de charbon actif contenant du charbon actif pulvérulent et un composé polycationique, pour le traitement de l'eau de piscine.

2. Utilisation selon la revendication 1, **caractérisée en ce que** la composition contient en complément un composé alcalin et un agent complexant.

3. Utilisation selon la revendication 1 ou 2, **caractérisée en ce que** la composition contient, par rapport au charbon actif pulvérulent sec, 10 à 50 % en poids d'eau, et garantit ainsi l'absence de poussière dans la composition.

4. Utilisation selon l'une quelconque des revendications 1 à 3, **caractérisée en ce que** la composition contient, par rapport au charbon actif pulvérulent sec, 0,1 à 15 % en poids du composé polycationique.

5. Utilisation selon l'une quelconque des revendications 2 à 4, **caractérisée en ce que** la composition contient, par rapport au charbon actif pulvérulent sec, 1 à 10 % de base selon la norme DIN 19643 et 1 à 5 % d'agent complexant.
